# EUROPEAN PATENT SPECIFICATION

(11) **EP 0 976 330 B1**
(45) Date of publication and mention of the grant of the patent: **03.12.2003**
(21) Application number: 99202143.6
(22) Date of filing: 01.07.1999
(51) Int. Cl.: A22C 11/00, A22C 17/00

(54) **Automatic machine for sewing edges of deboned hams or of other rolled-up meats**
Maschine zum Nähen der Ränder von entbeinten Schinken oder anderes aufgerollten Fleisch
Machine à coudre les bords des jambons désossés ou autre viande enroulée

(30) Priority: 08.07.1998 IT RE980070
(43) Date of publication of application: 02.02.2000
(73) Proprietor: MACCHINE SONCINI ALBERTO S.p.A., I-43013 Langhirano (Parma) (IT)
(72) Inventor: Canetti, Mario, 43013 Langhirano (Parma) (IT); Galloni, Luciano, 43013 Langhirano (Parma) (IT); Galloni, Dino, 43013 Langhirano (Parma) (IT)
(74) Representative: Corradini, Corrado

(56) References cited:
- FR-A- 2 302 690
- FR-A- 2 328 406
- US-A- 2 210 414

## Description

This invention relates to machines used to sew the edges of those cuts made in hams for their deboning.

A ham is deboned by making a cut along the direction of the bone to enable the bone to be extracted from the ham.

After extracting the bone from the ham, the cut is resewn both for hygienic reasons and to better preserve the meat.

Said resewing is done either manually or using an appropriate sewing machine.

One of these sewing machines is fully described in Italian Industrial Invention Patent No. 1034097 in the name of Carattini Adelmo.

The sewing machine described in said patent comprises means for maintaining the already deboned ham, and means for compressing the ham in such a manner as to bring the edges of the cut into contact to enable them to be sewn together.

In said machine the cut is sewn by a helical needle driven by means which cause it to firstly rotatingly advance to completely perforate the two adjacent edges of the cut, then after hooking the string onto the needle, it is withdrawn to make the stitch.

When the needle tip emerges close to the end of the cut, the operator knots the string to the needle tip and withdraws the needle in order to stitch with the string dragged by the needle.

Machines of the aforementioned type are known comprising two helically coiled needles with the same diameter and same pitch, but offset axially by a fraction of a pitch.

Said needles each have an end eye into which the operator has to manually insert the string.

Known machines require the fixed presence of an operator, who has to place the deboned ham in its cradle, control the needle advancement, knot the string to the needle or insert it through the needle eye, control the needle withdrawal and finally remove the ham from the cradle.

All these operations are lengthy and complicated, especially if they have to be performed on an in-line machine in a deboning plant which comprises other operations both before and after the sewing.

There is therefore a need for a sewing machine of the described type, the hourly production of which is adequate for the production rate of those machines in the same line, and which can operate with a certain degree of automation.

The object of the invention is to provide such a machine.

The invention attains said object by an automatic machine for sewing the edges of the cut in deboned hams, comprising at least one ham loading station, a ham sewing station, and an automatic discharge station for the hams.

In detail, the machine of the invention is provided with a turntable carrying at least three equidistant cradles for receiving deboned hams and arranged to rotate through predefined angles, driven by known means, in order to receive the deboned hams and feed them in succession to said working stations.

More specifically, with the sewing station there are associated:
- means for locking the ham in position and able to maintain the two edges of the cut adjacent,
- at least two helical sewing needles spaced apart by a fraction of a pitch to create, in said adjacent edges of the cut, slits for the passage of the sewing string, said needles being driven with roto-translational motion by known means,
- movable means which cut said string to length and to make it available to said needles, which seize it automatically and execute the stitching during their return stroke.

The characteristics of the machine by which the aforesaid objects are attained are defined in the claims.

To further clarify the constructional and operational characteristics of the invention, a preferred embodiment thereof is described hereinafter by way of non-limiting example and illustrated on the accompanying drawings.
Figure 1 is a partly sectional view of the invention.
Figure 2 is a a section on the plane II-II of Figure 1.
Figure 3 is an enlargement of the lower part of Figure 1.
Figure 4 is a view from IV of Figure 1.
Figure 5 is a section on the plane V-V of Figure 4.
Figure 6 is a section on the plane VI-VI of Figure 4.
Figure 7 is a partial perspective view of the sewing station.
Figure 8 is a perspective view of the pair of needles used in the machine of the invention, and shown with their ends enlarged.
Figure 9 is a section on the plane IX-IX shown in Figure 8.

Said figures show the sewing machine 1, which comprises a lattice-tube frame 2 provided lowerly with wheels 3, at least two of which are swivel wheels to enable it to be moved into the working region.

The frame 2 has an operating table 4 provided with a central hole receiving a disc 5, with which there are associated four equidistant identical cradles 6, 7, 8 and 9 for receiving the deboned hams.

Centrally below the disc 5 there is provided a thrust bearing 11, the inner ring 110 of which is fixed to the disc 5 by screws 12, its outer ring 111 being fixed to the frame 2 by screws 13, an intermediate plate 14 and the columns 140.

The columns 140 also support a bracket 15 for fixing the geared motor 16 with its usual step-down gear, its shaft being connected to the inner ring 110 of the thrust bearing 11 by the radial bars 17.

The purpose of the geared motor 16 is to rotate the disc 5 stepwise to bring the cradles 6, 7, 8, 9 successively into positions corresponding with the working stations with which the machine is provided, these being distributed along the disc periphery.

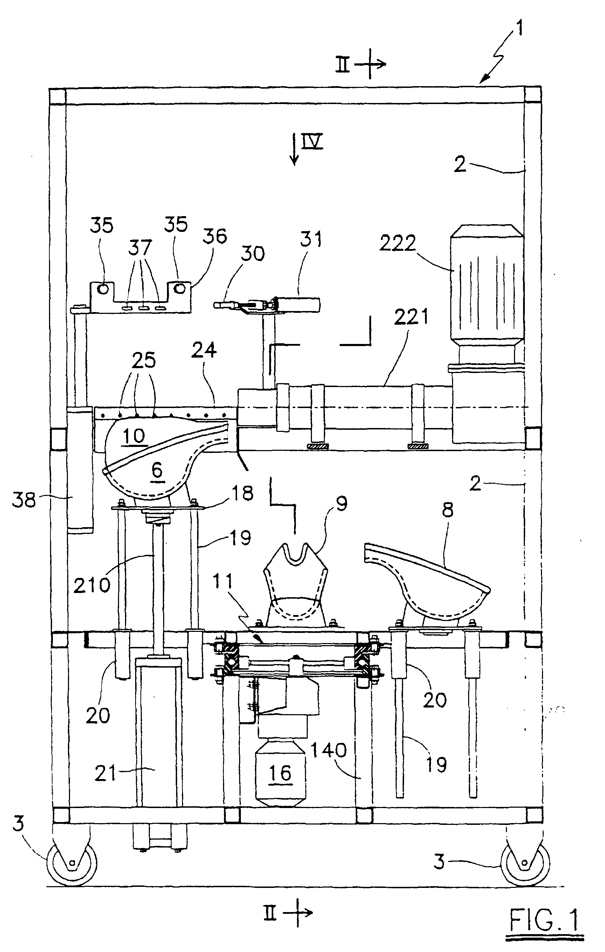

More specifically, with reference to the positions of the cradles 6, 7, 8, 9 shown in Figures 1, 2, 3, the cradle 6 lies in a position corresponding with the sewing station, the cradle 7 lies in a position corresponding with the automatic discharge station for the deboned and sewn ham, the cradle 8 lies in a position corresponding with the ham manual discharge station, and the cradle 9 lies in a position corresponding with the manual loading station for the deboned ham to be resewn.

Each of the cradles 6, 7. 8, 9 has a rectangular support base 18 from which there lowerly extend four identical shafts 19, each of which is slidingly received in a guide sleeve 20 supported by the disc 5.

Each base also lowerly comprises a central pad 180 which is received in a conjugate hole present in the disc 5.

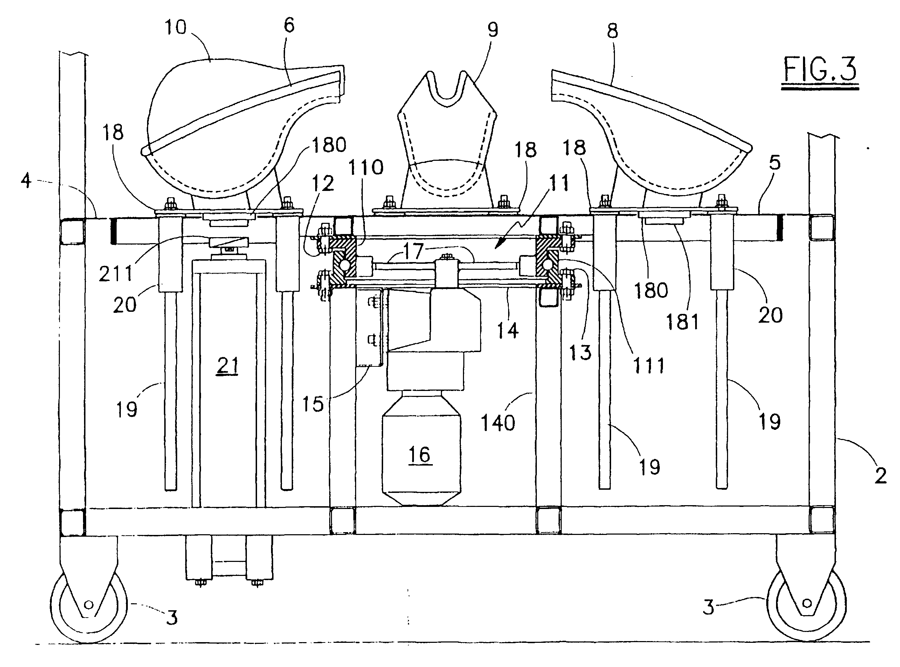

With reference to Figures 1 and 3 the frame supports below the operating table 4, in correspondence with the position associated with the sewing station, a cylinder-piston unit 21 the rod 210 of which is provided with a block 211 arranged to contact the pad 180 to raise and lower the cradle supporting the ham in order to move it to the overlying sewing station.

For this purpose the pad 180 comprises a permanent magnet 181, the block 211 being constructed of ferromagnetic material.

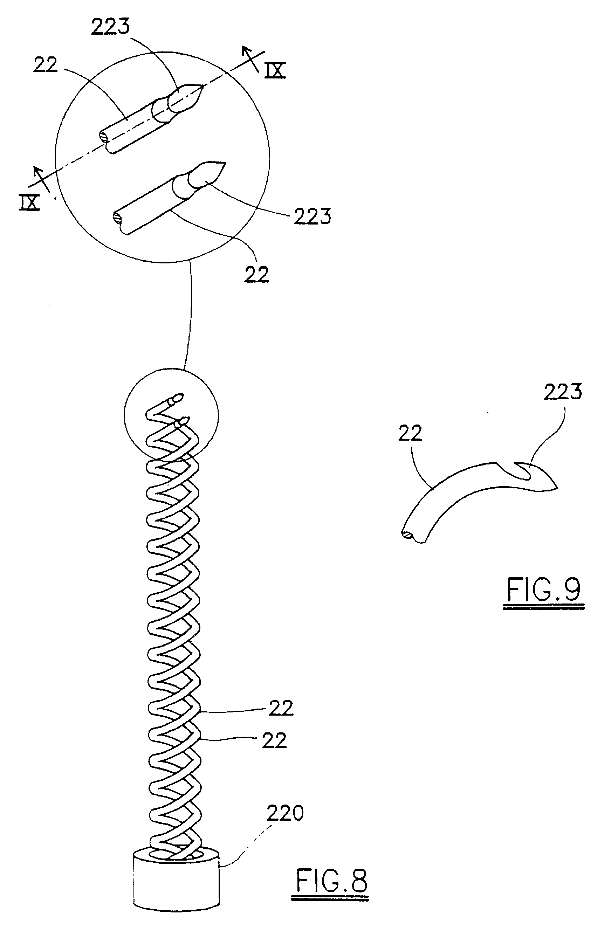

Said sewing station is positioned above the table 4 and comprises a pair of helically-coiled needles 22 supported at one end by one and the same cylindrical base 220, as shown in Figure 8.

The needles 22, which are parallel to each other and offset by half a pitch, are screwed into a fixed sleeve 221 provided internally with helical grooves, not shown, having the same pitch as the needles 22, so that on rotating the base 220 by means of the geared motor 222, the pair of needles 22 is rotated with simultaneous advancement.

The needle advancement system is known to the expert of the art, as substantially described in Italian Patent 1,046,868 in the name of Adelmo Carattini.

According to the invention, each needle 22 comprises at its end a hooked point 223 facing away from the needle winding diameter.

To the front of the fixed sleeve 221, and hence of the needles 22, there is a body 24 of rounded dihedron shape which is open at the top and has its walls diverging downwards.

The upper aperture of the body 24 is traversed by curved metal bars 25 which ensure its consistency and are distributed such as to enable the pair of needles to be inserted between them when made to advance by the geared motor 222. That portion of the upper aperture of the body 24 in contact with the front end of the sleeve 221 is occluded by a protection channel.

Said body 24 is arranged to receive the ham when urged upwards by the piston 21, and is shaped to cause the approach of the edges of the cut which is to be resewn.

When the ham 10 is present the needles 22 advance into partial insertion into the ham to form the slits through which the sewing string will pass.

The feed means for the string 26 are provided above said body 24, and specifically above that part of it most distant from the centre of the machine.

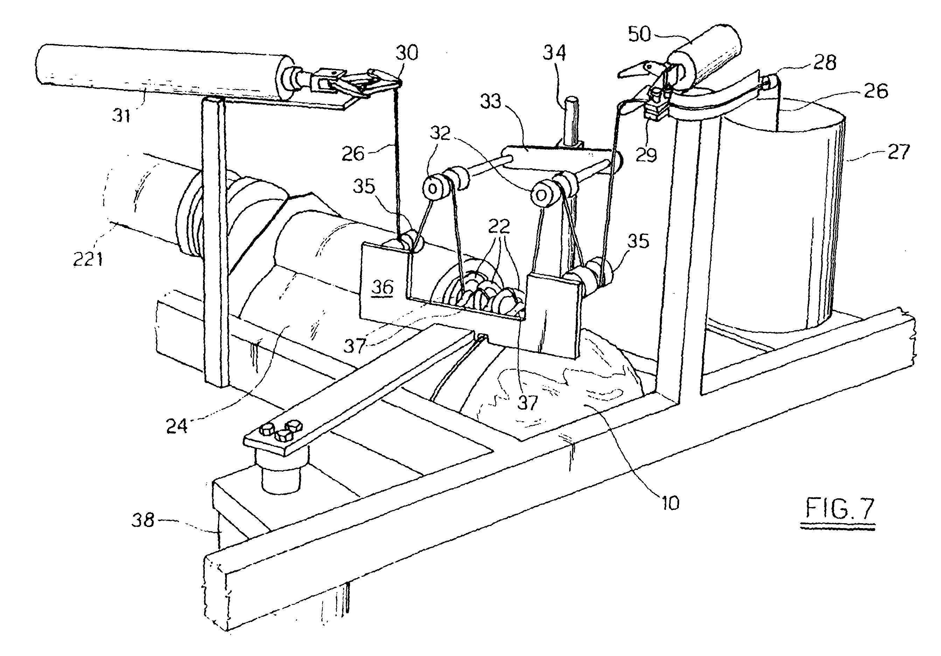

Said means comprise (see Figure 7) a container containing a ball of string 26 which unwinds freely. The free end of the string 26 passes through a guide ring 28 and is gripped by a fixed gripper 29.

In front of the fixed gripper 29 there is provided a movable gripper 30, operated by the cylinder-piston unit 31 and arranged to grip the free end of the string 26 projecting from the fixed gripper 29 and to drag it through the string tensioning means.

These latter comprise a pair of projecting pins 32 contained in a plane parallel to the plane 4 and maintained fixed in a position adjustable in height.

More specifically, said pins 32 project from a horizontal plate 33 slidable along a vertical bar 34 and lockable in the desired position by a clamp.

Said tensioning means also comprise a second pair of pins 35, external to the pair of pins 32 and supported by a profiled plate 36, which also supports three identical hooks 37 internal to the pair of pins 32. The plate 36 is fixed by known means to the end of the rod of the cylinder-piston unit 38, which drives it vertically.

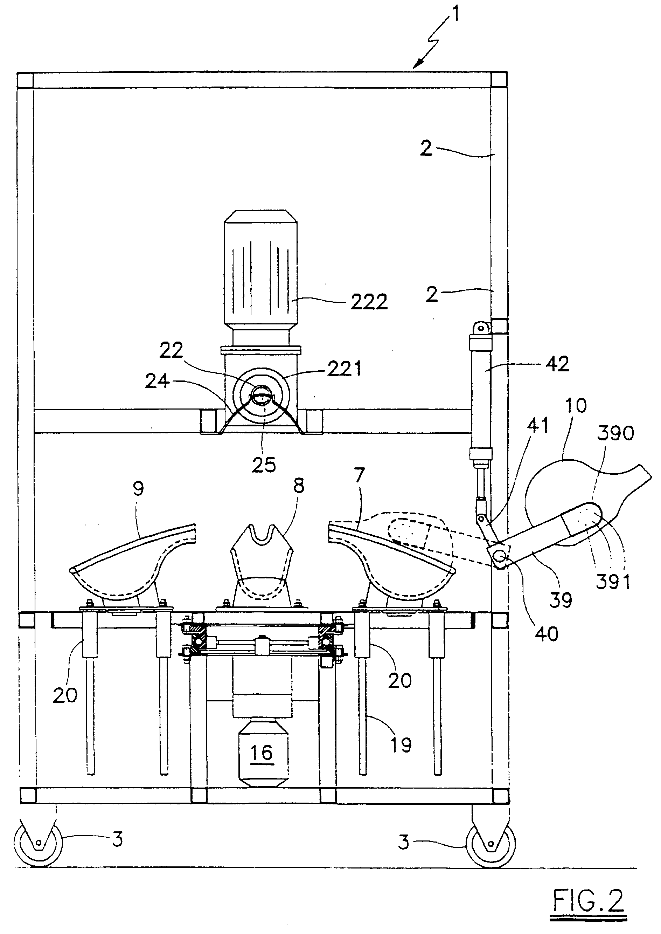

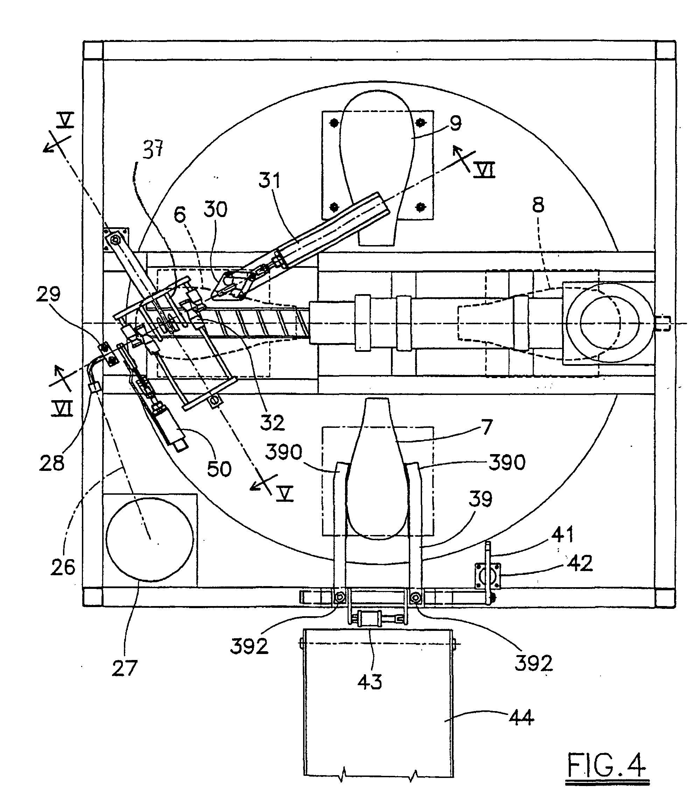

Figures 2 and 4 also show the automatic ham discharge station corresponding to the position of the cradle 7.

Said station comprises two opposing identical jaws 39, the ends 390 of which are provided with teeth 391 for gripping the ham 10, their opposite ends 392 being slidingly mounted on a common shaft 40.

Said jaws 39 are secured, by known means not shown, in such a manner as to rotate rigidly with the shaft, which at one end has a prolongation 41 perpendicular to the axis of the shaft 40 and fixed to the rod of the cylinder-piston unit 42, which is supported by the frame 2.

The ends 392 of the jaws 39 are joined together by a cylinder-piston unit 43 provided to close and open the jaws for gripping and releasing the ham 10.

The movement of all the described means is determined by a processor provided with a program which controls their operation in the following manner.

The operator places the ham in the manual loading station corresponding to the position occupied by the cradle 9 in the accompanying figures, and starts the sewing machine 1. The processor causes the disc 5 to rotate through an angle of 90° in the anticlockwise direction to bring the ham 10 to be deboned into a position corresponding to the sewing station. After undergoing said rotation, the cradle supporting the ham 10 is raised by the cylinder-piston unit 21, as shown in Figure 1, so as to maintain the ham at rest with the edges of its cut held adjacent to each other by virtue of the body 24, in the position in which the stitching is to be carried out.

At this point the processor causes the pair of needles 22 to advance and penetrate into the ham in correspondence with the edges of the cut for a predetermined distance preferably greater than the length of the cut, so creating the slits which are to receive the string 26.

Having terminated their advancement travel, the needles 22 stop and wait while the string is brought up to them by the feed and tensioning means.

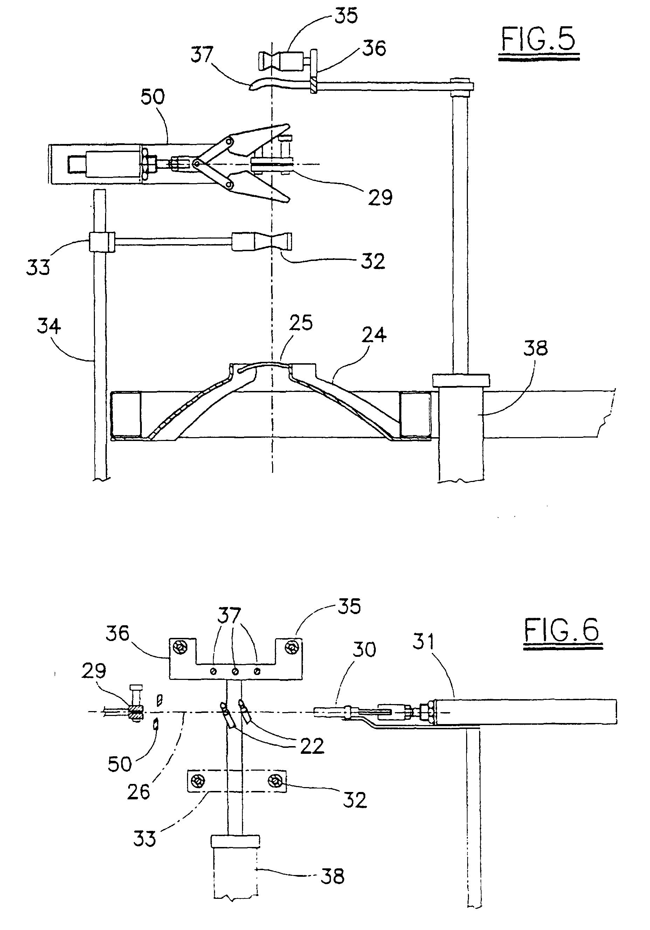

These latter operate in the following manner with reference to Figures 5, 6 and 7: the movable gripper 30 advances up to the fixed gripper 29 in order to seize the end of the string 26 projecting from it, and then withdraws to its initial position.

At this point the plate 36 is lowered, so that the pins 36 intercept the string 26 extending between said grippers, and lower it to cause it to rest against the pair of fixed pins 32 and make contact with the needles 22 by virtue of the hooks 37, as shown in Figure 7.

The pair of needles 22, the ends of which are provided with hooked points 223 shaped to hook the string 26 and drag it so as to sew up the cut, are then rotated in the reverse direction.

It should be noted that as soon as the needles 22 have hooked the string 26, the cutting device 50 cuts the string at the fixed gripper, while simultaneously the movable gripper 30 releases the other end of the string 26.

When sewing is complete, the plate 36 is raised by the cylinder-piston unit into its initial position shown in Figure 5, while the cylinder-piston unit 21 simultaneously lowers the cradle with the sewn ham and the processor rotates the disc 5 to bring the ham into the automatic discharge station.

In said station the jaws 39 seize the ham by means of the cylinder-piston unit 43, then the jaws are rotated outwards by the cylinder-piston unit 42 through an angle of approximately 180° to release the sewn ham onto the underlying conveyor belt 44.

It should be noted that the length of the sewing string 26 can be varied on the basis of the length of the cut by adjusting the height of the plate 33.

## Claims

1. An automatic machine for sewing the edges of the cut of deboned hams or other rolled-up meats, comprising a cradle (7, 8, 9, 10) for receiving the ham, means for raising said cradle into a position of availability to a sewing station, sewing means in the form of a pair of helix-coiled needles (22) having end hooked paints (223) with the same pitch and same diameter but offset by a fraction of a pitch, and means (221, 222) for rotatingly advancing said needles through the edges of the cut and for rotatingly withdrawing them to drag the sewing string through the slits created during the movement of advancement, **characterised by** comprising a string container (27), means (29) for locking the string in proximity to the exit of said container, means (30,31) for dragging the string through a distance while maintaining it taut, a first series of fixed counteracting members (32) of adjustable height positioned below the length of string, and a second series of vertically movable counteracting members (35) spaced from the fixed counteracting members to drag the string downwards while maintaining it resting on the fixed counteracting members, said movable counteracting members comprising hooks (37) arranged to rest on a central portion of the length of string above the terminal portion of the helically-coiled needles.

2. A machine as claimed in claim 1, **characterised by** comprising at least three cradles (7, 8, 9. 10) mounted on a rotary plate (5) (disc) operated stepwise to bring the cradles into a position of availability to the sewing station.

3. A machine as claimed in claim 2, **characterised in that** the cradles are movable vertically, guided by suitable shafts (19), and comprise a lower pad (180) which projects below the plate and is arranged to engage with the end of the rod of an underlying piston (21) rigid with the frame.

4. A machine as claimed in claim 3, **characterised in that** the pad (180) comprises a permanent magnet, the rod carrying a crosspiece (211) of ferromagnetic material.

5. A machine as claimed in claim 2, **characterised by** comprising, immediately downstream of the sewing station, a station for the automatic discharge of the ham from the respective cradle.

6. A machine as claimed in claim 5, **characterised in that** said automatic discharge station comprises two identical opposing jaws (39), the ends (390) of which are provided with teeth (391) for gripping the ham, whereas their opposite ends (392) are mounted on a common shaft (40) to which they are locked torsionally but are able to slide along its axis under the action of a cylinder-piston unit (42).

7. A machine as claimed in claim 6, **characterised in that** at one end the common shaft comprises perpendicular to its axis an appendix hinged to the rod of the cylinder-piston unit (42) supported by the frame.

8. A machine as claimed in the preceding claims, **characterised by** comprising a programmable processor which controls the operation of the various actuator devices in accordance with the desired cycle.

## Patentansprüche

1. Automatische Vorrichtung zum Vernähen der Schnittkanten an entbeinten Schinken oder anderem gerolltem Fleisch, die eine Wiege (7,8,9,10) zur Aufnahme des Schinkens, Einrichtungen zum Anheben der Wiege in eine Verfügbarkeitsposition für eine Nähstation, Näheinrichtungen in Form eines Paares spiralförmig gewundener Nadeln (22) mit hakenförmigen Enden (223) mit derselben Steigung und demselben Durchmesser, die jedoch um einen Bruchteil einer Steigung versetzt sind, und Einrichtungen (221,222) zum Vorschub der Nadeln mittels einer Drehbewegung durch die Schnittkanten, und zum Zurückziehen derselben mittels einer Drehbewegung aufweist, um den Nähfaden durch die während der Vorschubbewegung erzeugten Schlitze zu ziehen,
**dadurch gekennzeichnet, dass**
sie einen Fadenbehälter (27), eine Einrichtung (29) zum Arretieren des Fadens in der Nähe des Austritts aus dem Behälter, Einrichtungen (30,31) zum Ziehen des Fadens über eine Distanz, wobei er straff gespannt gehalten wird, eine erste Reihe feststehender, entgegenwirkender Bauteile (32) mit regulierbarer Höhe, die unter der Länge des Fadens positioniert sind, und eine zweite Reihe vertikal bewegbarer, entgegenwirkender Bauteile (35) aufweist, die von den feststehenden, entgegenwirkenden Bauteilen so beabstandet sind, dass sie den Faden nach unten ziehen, während sie ihn auf den feststehenden, entgegenwirkenden Bauteilen ruhend halten, wobei die entgegenwirkenden Bauteile Haken (37) aufweisen, die so angeordnet sind, dass sie auf einem Mittelabschnitt der Länge des Fadens über dem Endabschnitt der spiralförmig gewundenen Nadeln ruhen.

2. Vorrichtung nach Anspruch 1,
**dadurch gekennzeichnet, dass**
sie mindestens drei Wiegen (7,8,9,10) aufweist, die auf einer Drehplatte (5) (Scheibe) angebracht sind, welche schrittweise betrieben wird, um die Wiegen in eine Verfügbarkeitsposition für die Nähstation zu bringen.

3. Vorrichtung nach Anspruch 2,
**dadurch gekennzeichnet, dass**
die Wiegen vertikal bewegbar, von geeigneten Wellen (19) geführt sind und eine untere Auflage (180) aufweisen, die unter der Platte hervorsteht und so angeordnet ist, dass sie mit dem Ende der Stange eines starr mit dem Rahmen verbundenen, darunter liegenden Kolbens (21) in Eingriff geht.

4. Vorrichtung nach Anspruch 3,
**dadurch gekennzeichnet, dass**
die Stange ein Querstück (211) aus einem ferromagnetischen Werkstoff trägt.

5. Vorrichtung nach Anspruch 2,
**dadurch gekennzeichnet, dass**
sie unmittelbar stromabwärts der Nähstation eine Station zum automatischen Entladen des Schinkens aus der jeweiligen Wiege aufweist.

6. Vorrichtung nach Anspruch 5,
**dadurch gekennzeichnet, dass**
die automatische Entladestation zwei identische, einander gegenüberliegende Klauen (39) aufweist, deren Enden (390) mit Zähnen (391) zum Ergreifen des Schinkens versehen sind, während ihre entgegengesetzten Enden (392) auf einer gemeinsamen Welle (40) angebracht sind, auf welcher sie gegen Drehbewegung blockiert, jedoch in der Lage sind, unter der Einwirkung einer Zylinder-Kolben-Einheit (42) entlang deren Achse zu gleiten.

7. Vorrichtung nach Anspruch 6,
**dadurch gekennzeichnet, dass**
die gemeinsame Welle an einem Ende senkrecht zu ihrer Achse einen gelenkig mit der Stange der von dem Rahmen getragenen Zylinder-Kolben-Einheit (42) verbundenen Ansatz aufweist.

8. Vorrichtung nach einem der vorangegangenen Ansprüche,
**dadurch gekennzeichnet, dass**
sie einen programmierbaren Prozessor aufweist, der den Betrieb der verschiedenen Stellgliedeinrichtungen in Übereinstimmung mit dem gewünschten Zyklus steuert.

## Revendications

1. Machine automatique destinée à scier des bords de tranche de jambon désossé ou d'autres viandes roulées, comprenant un berceau (7, 8, 9, 10) destiné à loger le jambon, un dispositif destiné à soulever le berceau en position de disponibilité à un poste de sciage, un dispositif de sciage sous forme d'une paire d'aiguilles enroulées en hélice (22) ayant des pointes à crochets d'extrémité (223) de même pas et de même diamètre, mais décalées d'une fraction du pas, et un dispositif (221, 222) destiné à faire avancer les aiguilles en tournant aux bords de la tranche et à les retirer en tournant pour tirer le fil de sciage dans les fentes créées au cours du mouvement d'avance, **caractérisée en ce qu'**elle comprend un récipient (27) de fil, un dispositif (29) de blocage du fil à proximité de la sortie du récipient, un dispositif (30, 31) destiné à freiner le fil sur une certaine distance en le maintenant tendu, une première série d'organes antagonistes fixes (32) de hauteur réglable placés au-dessous du tronçon de fil, et une seconde série d'organes antagonistes mobiles verticalement (35) distants des organes antagonistes fixes pour freiner le fil vers le bas en le maintenant en appui sur les organes antagonistes fixes, les organes antagonistes mobiles ayant des crochets (37) destinés à être en appui sur une partie centrale du tronçon de fil au-dessus de la partie terminale des aiguilles enroulées en hélice.

2. Machine selon la revendication 1, **caractérisée en ce qu'**elle comprend au moins trois berceaux (7, 8, 9, 10) montés sur une plaque rotative (5) (disque) commandée par pas afin que les berceaux soient mis en position de disponibilité au poste de sciage.

3. Machine selon la revendication 2, **caractérisée en ce que** les berceaux sont mobiles verticalement en étant guidés par des arbres convenables (19), et comporte un patin inférieur (180) qui dépasse sous la plaque et est destiné à être au contact de l'extrémité de la tige d'un piston (21) placé au-dessous et fixé rigidement au châssis.

4. Machine selon la revendication 3, **caractérisée en ce que** le patin (180) comporte un aimant permanent, la tige portant une traverse (211) formée d'un matériau ferromagnétique.

5. Machine selon la revendication 2, **caractérisée en ce qu'**elle comprend, juste en aval du poste de sciage, un poste d'évacuation automatique du jambon du berceau respectif.

6. Machine selon la revendication 5, **caractérisée en ce que** le poste d'évacuation automatique comporte deux mâchoires identiques opposées (39) dont les extrémités (390) possèdent des dents (391) de serrage du jambon, alors que leurs extrémités opposées (392) sont montées sur un arbre commun (40) sur lequel elles sont bloquées en torsion mais peuvent coulisser le long de son axe sous l'action d'une unité (42) comprenant un cylindre et un piston.

7. Machine selon la revendication 6, **caractérisée en ce que**, à une première extrémité, l'arbre commun comporte, perpendiculairement à son axe, un accessoire articulé sur la tige de l'unité (42) à cylindre et piston et supporté par le châssis.

8. Machine selon l'une quelconque des revendications précédentes, **caractérisée en ce qu'**elle comprend un processeur programmable qui commande le fonctionnement des divers dispositifs à organe de manoeuvre en fonction du cycle voulu.
